# DEMANDE DE BREVET EUROPEEN

(11) **EP 0 635 426 A1**
(43) Date de publication de la demande: **25.01.1995**
(21) Numéro de dépôt: 94401522.1
(22) Date de dépôt: 04.07.1994
(51) Int. Cl.: B64C 25/34, B64C 25/12

(54) **Train d'atterrissage d'aéronef, du type à relevage latéral**

(30) Priorité: 19.07.1993 FR 9308812
(71) Demandeur: MESSIER-ERAM, F-78140 Velizy Villacoublay (FR)
(72) Inventeur: Derrien, Michel, F-78000 Versailles (FR); Ducos, Dominique, F-91600 Savigny Sur Orge (FR)
(74) Mandataire: Jaunez, Xavier

(57) **Abrégé**

L'invention concerne un train d'atterrissage d'aéronef, du type à relevage latéral, et à roues en tandem.

Conformément à l'invention, la jambe (50) est formée d'un caisson en V (10) dont les deux branches (11, 12) sont articulées entre elles, avec une première branche formant poutre (11) articulée sur la structure d'aéronef, et une seconde branche (12) en extrémité de laquelle est articulé un balancier (14) porteur de roues. Un amortisseur (17) relie les deux branches (11, 12) de façon à former un triangle qui est fixe lors du relevage ou de la descente du train. Le balancier (14) s'étend de part et d'autre de son axe central (15), et il est relié, par l'intermédiaire d'un élément positionneur (27), à une bielle (25) articulée sur la première branche (11) du caisson, cette bielle étant en outre reliée à ladite première branche par un embiellage (30) lui-même relié à la structure d'aéronef par une bielle directrice (35). Alors, en position train bas, l'embiellage (30) constitue un alignement et la partie avant du balancier (14) est relevée, tandis que le balancier (14) est sensiblement parallèle à la première branche (11) du caisson lorsque le train est relevé.

## Description

L'invention concerne les trains d'atterrissage d'aéronef, du type à relevage latéral, comportant une jambe articulée sur une structure d'aéronef équipée inférieurement d'un train de roues, ainsi qu'un vérin de manoeuvre assurant le pivotement de cette jambe autour de son axe.

On connaît de tels trains d'atterrissage de fuselage dont la jambe est formée d'un caisson rigide en L renversé, en extrémité duquel est articulé un balancier s'étendant vers l'arrière et portant une roue unique, ou plus souvent deux roues en diabolo. Le caisson rigide est articulé sur la structure d'aéronef par une branche qui est horizontale ou légèrement inclinée, et un amortisseur relie cette branche au balancier.

La longueur du train est dans ce cas essentiellement la même en position train rentré et en position train sorti (avant le contact des roues avec le sol) : l'inclinaison éventuelle de l'axe d'articulation du caisson rigide sur la structure d'avion produit certes un léger avancement de la roue lors du relevage du train, mais cet avancement reste minime.

On peut être amené à rechercher des trains d'atterrissage dont la structure leur permet d'être long à l'atterrissage, et court au roulage et en position train rentré, pour éviter un dimensionnement latéral excessif du carénage associé de l'aéronef, et éviter éventuellement aussi d'avoir à modifier des cadres existants, afin de pouvoir disposer d'aéronefs modifiés pour accepter une charge plus élevée, et par suite devant être équipés de pneumatiques de plus grandes dimensions, tout en conservant la même structure de fuselage.

Or, les atterrisseurs équipés d'un dispositif de raccourcissement de leur jambe au relevage sont en général de structure complexe et encombrante.

On connaît également des trains d'atterrissage de fuselage à jambe directe, dont le caisson rigide est en forme de T, et dont la tige coulissante est équipée à son extrémité d'un balancier porteur de roues en diabolo monté pour tourner autour d'un axe central qui, en position train bas, est perpendiculaire au plan longitudinal médian de l'aéronef. On parle alors d'un bogie basculant, et le contrôle du basculement est assuré par un élément positionneur du type bielle télescopique assurant, au contact des roues arrière du bogie incliné avec la piste, un enfoncement de la tige coulissante de l'amortisseur intégré, ceci grâce à un effet de butée.

Cependant, cette solution implique un encombrement latéral important pour le logement du train du fait de la longueur de la jambe, et de plus n'est pas satisfaisante dans le cas où l'on souhaite avoir deux roues agencées l'une derrière l'autre (disposition dite en tandem) plutôt que deux paires de roues en diabolo, car il est alors nécessaire de déporter la jambe, ce qui induit la transmission d'efforts au niveau des paliers de coulissement, et par suite perturbe le bon fonctionnement de l'amortisseur.

On peut enfin citer, pour compléter l'état de la technique, les documents US-A-3 384 331 et US-A-3 261 574.

L'invention a précisément pour but d'apporter une solution à ce problème, en concevant un train d'atterrissage particulièrement bien adapté au cas de deux roues disposées en tandem, et ne présentant pas les inconvénients et/ou limitations précités.

L'invention a ainsi pour objet de réaliser un train d'atterrissage capable d'être long à l'atterrissage, et court au roulage et en position train rentré, en vue d'une compacité aussi grande que possible lorsque le train est rentré et d'une disposition optimale vis-à-vis de la structure.

L'invention a également pour objet de réaliser un train d'atterrissage dont la structure permette une variation précise, fiable et sans séquence, de sa géométrie lors du relevage.

Il s'agit plus particulièrement d'un train d'atterrissage d'aéronef, du type à relevage latéral, comportant une jambe articulée sur une structure d'aéronef et équipée inférieurement d'un train de roues, ainsi qu'un vérin de manoeuvre assurant le pivotement de cette jambe autour de son axe, caractérisé en ce que :
- la jambe est formée d'un caisson en V dont les deux branches sont articulées entre elles, avec une première branche formant poutre qui est articulée sur la structure d'aéronef, et une seconde branche en extrémité de laquelle est articulé un balancier porteur de roues en pouvant tourner autour d'un axe central, qui, en position train bas, est sensiblement perpendiculaire au plan longitudinal médian de l'aéronef ;
- un amortisseur relie les deux branches du caisson articulé de façon à former un triangle qui est fixe lors du relevage ou de la descente du train ;
- le balancier s'étend de part et d'autre de son axe central, et sa partie avant est reliée, par l'intermédiaire d'un élément positionneur, à une bielle articulée sur la première branche du caisson, ladite bielle étant en outre reliée à cette première branche par un embiellage lui-même relié à la structure d'aéronef par une bielle directrice, cet agencement étant tel qu'en position train bas l'embiellage constitue un alignement et la partie avant du balancier porteur de roues est relevée, et que le balancier est sensiblement parallèle à la première branche du caisson lorsque le train est relevé.

Selon un mode d'exécution particulier l'amortisseur est accroché sur un appendice d'extrémité de la seconde branche du caisson articulé, et sur un appendice frontal de la première branche dudit caisson, et le balancier porteur de roues est disposé, en position train bas, en-dessous dudit appendice d'extrémité.

De préférence, la bielle associée à l'élément positionneur est montée pour tourner autour d'un axe qui coïncide avec l'axe d'articulation des deux branches du caisson. En particulier, cette bielle est montée sur une excroissance frontale de cet axe d'articulation.

Avantageusement encore, l'embiellage associé à l'élément positionneur est constitué par une bielle et un levier, ladite bielle étant articulée en extrémité de la bielle qui est associée à l'élément positionneur et ledit levier étant articulé sur la première branche du caisson en étant couplé avec un levier complémentaire sur lequel s'accroche une extrémité de la bielle directrice. De préférence alors, le levier de l'embiellage est monté pour tourner sur un axe qui présente un prolongement s'étendant de l'autre côté de la première branche du caisson articulé, la bielle directrice coopérant avec ce prolongement d'axe par l'intermédiaire du levier complémentaire.

Selon une autre caractéristique avantageuse, l'élément positionneur est une bielle télescopique formant barre directrice en étant verrouillée hydrauliquement lors du relevage ou de la descente du train, et amortisseur de tangage lors du roulage.

Il est par ailleurs nécessaire de prévoir des moyens de contreventement associés à la jambe de train.

Avantageusement alors, il est prévu une contrefiche articulée dont le bras supérieur est articulé, par une première chape tourillonnante, à la structure d'aéronef, et dont le bras inférieur est articulé, par une seconde chape tourillonnante, à la seconde branche du caisson, ledit bras inférieur pouvant en outre tourner autour de son axe par rapport à cette seconde chape tourillonnante grâce à une chape tournante d'extrémité associée audit bras. De préférence, la première chape tourillonne autour d'un axe qui coïncide avec l'axe d'articulation des deux branches du caisson.

D'autres caractéristiques et avantages de l'invention apparaîtront plus clairement à la lumière de la description qui va suivre et des dessins annexés, concernant un mode de réalisation particulier, en référence aux figures où :
- les figures 1 et 2 sont des vues respectivement latérale et frontale d'un train d'atterrissage à caisson en V articulé conforme à l'invention, en position train bas (la position train haut est en outre schématisée en traits mixtes sur la figure 2) ;
- la figure 3 est une vue de dessus montrant le train symétrique du précédent, en position train haut (train rentré).

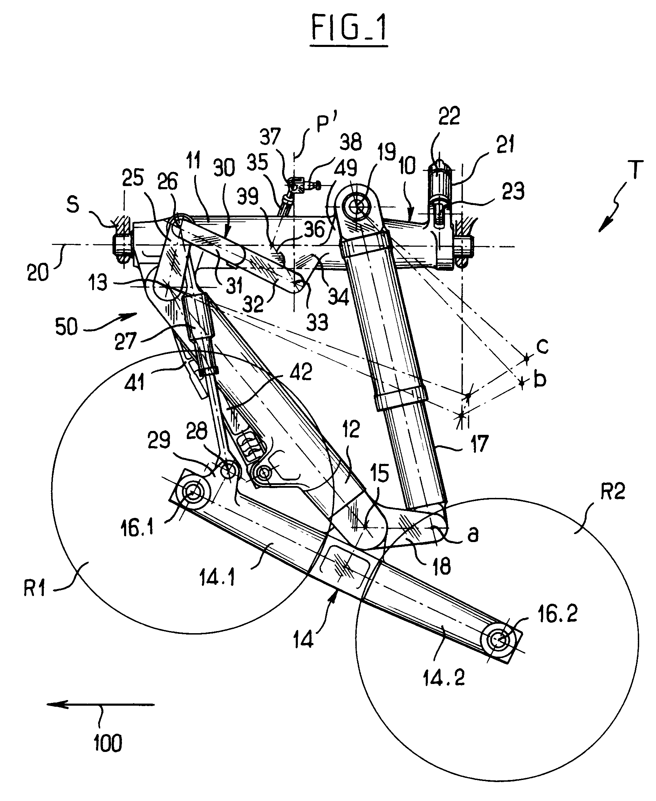

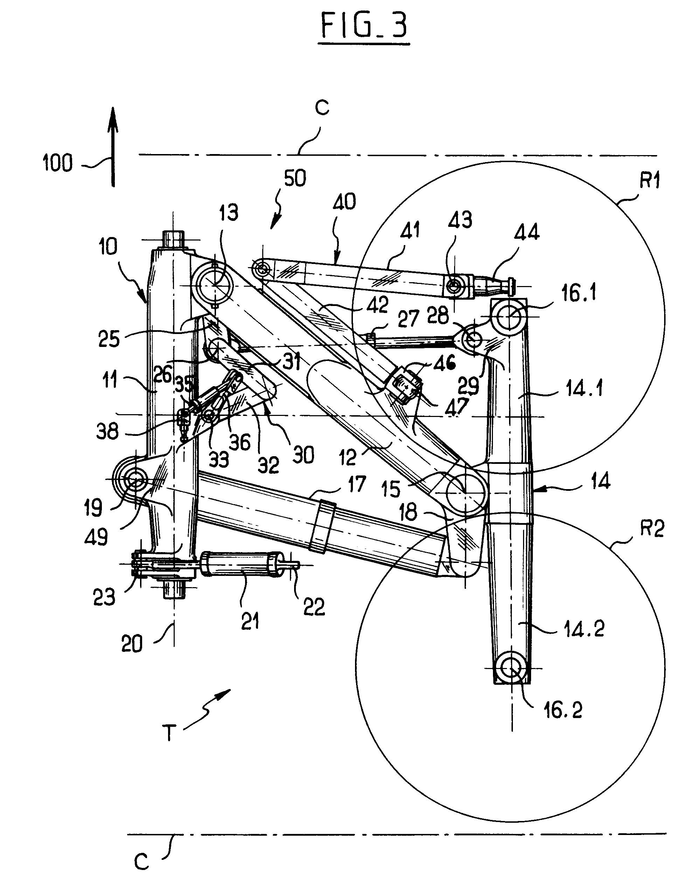

On va maintenant décrire, en se référant aux figures 1 à 3, un train d'atterrissage T conforme à l'invention, ledit train étant du type à relevage latéral, et étant reçu, en position train haut, dans un logement associé L de la structure d'aéronef concernée, lequel logement est délimité par deux voiles transversaux C que l'on a schématisés par des traits mixtes sur la figure 3.

Le train d'atterrissage T comporte une jambe 50 articulée sur une structure d'aéronef S, et équipée inférieurement d'un train de roues R1 et R2, ainsi qu'un vérin de manoeuvre 21 assurant le pivotement de cette jambe autour de son axe.

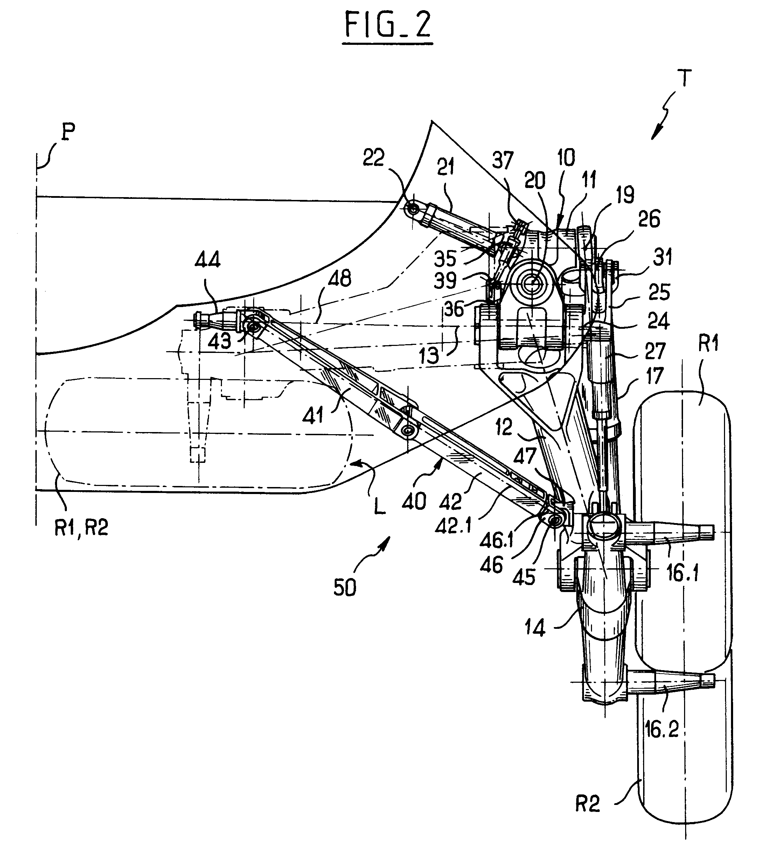

La jambe 50 est formée d'un caisson 10 en V, dont les deux branches 11, 12 sont articulées entre elles au niveau d'un axe 13, avec une première branche formant poutre 11, qui est articulée sur la structure d'aéronef S, l'axe correspondant étant référencé 20, et une seconde branche 12 en extrémité de laquelle est articulé un balancier 14 porteur de deux roues disposées en tandem, en pouvant tourner autour d'un axe central 15 qui, en position train bas, est sensiblement perpendiculaire au plan longitudinal médian de l'aéronef P (ce plan est référencé sur la figure 2). Le balancier 14 s'étend ainsi de part et d'autre de son axe central 15, et comporte une partie avant 14.1 équipée d'un axe de roue 16.1, et une partie arrière 14.2 équipée d'un axe de roue 16.2. En position train bas, comme illustré sur la figure 1, la partie avant 14.1 du balancier 14 porteur de roues est relevée, tandis qu'en position train haut, comme illustré sur la figure 3, le balancier 14 est sensiblement parallèle à la première branche 11 du caisson articulé. Ceci est obtenu grâce à un élément positionneur 27 et à un système d'embiellage 30 qui seront décrits plus loin plus en détail.

Un amortisseur 17 relie les deux branches 11, 12 du caisson articulé 10, en étant ici accroché sur un appendice 18 de la seconde branche 12 du caisson articulé 10, et en 19 sur un appendice frontal 49 de la première branche 11 dudit caisson. En position train bas, le balancier 14 porteur de roues est disposé en-dessous de l'appendice d'extrémité 18.

Les deux branches 11, 12 du caisson articulé et l'amortisseur 17, forment ainsi un triangle qui est fixe lors du relevage ou de la descente du train, et déformable lors du roulage de l'aéronef sur la piste. Sur la figure 1, on a repéré par a la position de l'axe d'accrochage de l'amortisseur 17 sur l'appendice 18 lorsque cet amortisseur est tout détendu (train sorti et avant le contact avec la piste), puis par b et c les positions correspondantes de cet axe d'accrochage respectivement sous charge statique et amortisseur tout comprimé. La branche 12 du caisson articulé est donc pivotante (sous charge) en position train bas, mais fixe lors du relevage ou de la descente du train. On obtient ainsi un train d'atterrissage qui est long à l'atterrissage.

Etant donné que l'on cherche à obtenir un train d'atterrissage qui est également court au roulage et en position train rentré, il convient d'organiser un pivotement du balancier pour ramener la direction de celui-ci parallèlement à l'axe d'articulation de la jambe, afin d'obtenir une compacité optimale lorsque le train est rentré, en vue d'un encombrement latéral minimal. De ce fait, on a prévu des moyens permettant pour faire pivoter, automatiquement et sans séquence, le balancier autour de son axe central 15, de façon à relever la roue arrière R2 lors du relevage de la jambe de train. Le pivotement de la jambe est obtenu par actionnement du vérin de manoeuvre associé 21, qui est accroché en 22 sur la structure d'avion, et en 23 sur un appendice d'extrémité de la première branche 11 formant poutre du caisson articulé 10.

La partie avant 14.1 du balancier 14 est reliée, par l'intermédiaire d'un élément positionneur 27, à une bielle 25 qui est articulée sur la première branche du caisson 10, ladite bielle étant en outre reliée à cette première branche par un embiellage 30 lui-même relié à la structure d'aéronef par une bielle directrice 35. L'agencement est conçu de telle façon qu'en position train bas, l'embiellage 30 constitue un alignement et la partie avant 14.1 du balancier 14 est relevée (position de la figure 1), et que le balancier 14 est sensiblement parallèle à la première branche du caisson lorsque le train est relevé (figure 3).

L'élément positionneur 27 est de préférence réalisé sous la forme d'une bielle télescopique qui forme barre directrice en étant verrouillée hydrauliquement (par la pression hydraulique de la génération de l'aéronef) lors du relevage ou de la descente du train, et constitue un amortisseur de tangage lors du roulage (le fluide hydraulique étant alors seulement relié au système de pressurisation de l'aéronef). Cet élément positionneur 27 est articulé en 28 sur un appendice d'extrémité 29 de la partie avant 14.1 du balancier 14, et en 26 sur l'extrémité de la bielle 25. Ainsi que cela est mieux visible sur la figure 2, la bielle 25 associée à l'élément positionneur 27 est montée pour tourner autour d'un axe qui coïncide avec l'axe d'articulation 13 des deux branches 11, 12 du caisson. Plus précisément, la bielle 25 sera avantageusement montée sur une excroissance frontale 24 de cet axe d'articulation 13, conformément à la représentation donnée sur la figure 2.

L'embiellage 30 associé à l'élément positionneur 27 est ici constitué par une bielle 31 et un levier 32. La bielle 31 est articulée en extrémité de la bielle 25 associée à l'élément positionneur, tandis que le levier 32 est articulé en 33 sur un appendice 34 de la première branche 11 du caisson. En l'espèce, cet axe d'articulation 33 est situé dans le plan médian P' de la première branche 11 du caisson. En position train bas, la bielle 31 et le levier 32 forment un alignement, de sorte que la bielle 25 et l'embiellage 30 forment une triangulation sur laquelle est accroché l'élément positionneur 27. Ceci assure la position relevée du balancier en position train bas, cette position relevée étant à la fois stable et précise. Pour ramener le balancier dans une position parallèle à l'axe d'articulation 20, on a prévu ici d'agir sur le levier 32 pour briser l'alignement de l'embiellage 30, par action de la bielle directrice associée 35. En effet, le pivotement du levier 32 dans le sens anti-horaire (sur la figure 1) a alors pour effet de pousser sur l'élément positionneur 27, et par suite de faire pivoter progressivement le balancier 14 jusqu'à sa position finale qui est parallèle à la première branche 11 du caisson. Il est intéressant de pouvoir agencer la bielle directrice 35 de l'autre côté de l'embiellage 30 par rapport à la première branche 11 du caisson : de ce fait, on a à cet effet prévu que le levier 32 soit couplé avec un levier complémentaire 36 sur lequel s'accroche une extrémité de la bielle directrice 35. Le levier 32 est alors monté pour tourner sur un axe 33 qui a la particularité de présenter un prolongement s'étendant de l'autre côté de la première branche 11 du caisson articulé, la bielle directrice 35 étant alors accrochée en 39 sur l'extrémité de ce levier complémentaire 36 qui forme un ensemble rigide avec le premier levier 32. A son autre extrémité, la bielle directrice 35 est accrochée en 37 sur une chape 38 qui tourillonne sur la structure d'avion. La bielle directrice 35 peut alors coopérer avec le prolongement de l'axe 33 par l'intermédiaire du levier complémentaire 36 lorsque la jambe du train pivote autour de son axe d'articulation 20. Le changement de géométrie est alors obtenu sans séquence, ce qui favorise la précision et la fiabilité de la position finale obtenue en position train haut.

On est ainsi parvenu à réaliser un train d'atterrissage qui est à la fois long à l'atterrissage, et court au roulage et en position train rentré.

Il est par ailleurs nécessaire de prévoir des moyens de contreventement associés à la jambe de train. Ces moyens de contreventement sont prévus pour stabiliser le triangle formé par l'amortisseur 17 et les deux branches 11, 12 du caisson articulé au regard des charges latérales, lors du roulage sur la piste. Le fait que le caisson de la jambe de train soit articulé, tout en conservant sa forme en V, induit une structure particulière des moyens de contreventement, lorsque ceux-ci sont prévus.

Dans le cas où l'on utilise seulement deux roues en tandem, comme cela est illustré ici, on peut prévoir une contre-fiche articulée 40 dont le bras supérieur 41 est articulé, par une première chape tourillonnante 44, à la structure d'aéronef, et dont le bras inférieur 42, est articulé, par une seconde chape tourillonnante 47, à la seconde branche 12 du caisson, le bras inférieur 42 pouvant en outre tourner autour de son axe 42.1 par rapport à cette seconde chape tourillonnante 47, grâce à une chape tournante d'extrémité 46 associée audit bras, dont l'axe 46.1 coïncide avec l'axe 42.1 précité. Si l'on préfère utiliser un balancier portant deux paires de roues disposées en diabolo, la contre-fiche articulée doit alors être organisée différemment, en étant accrochée à un niveau plus élevé sur la seconde branche 12 du caisson articulé.

Les composants de la contre-fiche articulée 40 sont mieux visibles sur les figures 2 et 3. On distingue ainsi le bras supérieur 41 qui est articulé en 43 sur la première chape tourillonnante 44, et le bras inférieur 42 qui est articulé en 45, par sa chape tournante 46 dudit bras, sur la seconde chape tourillonnante 47 montée sur la seconde branche 12 du caisson 10. L'accrochage du bras supérieur 41 sur la structure d'avion est donc du type cardan, et l'accrochage du bras inférieur 42 sur la seconde branche 12 du caisson est du type rotule à très grand débattement (car on doit disposer d'une liberté supplémentaire de pivotement qui peut être de l'ordre de 90°).

Il est intéressant de noter que la première chape 44 tourillonne autour d'un axe 48 qui coïncide ici avec l'axe d'articulation 13 des deux branches 11, 12 du caisson. Cet agencement permet d'obtenir un pivotement monolithique, et d'éviter tout mouvement relatif entre la branche inférieure 12 du caisson et la contre-fiche articulée 40.

On est ainsi parvenu à réaliser un train d'atterrissage capable d'être long à l'atterrissage, et court au roulage et en position train rentré, en vue d'une compacité aussi grande que possible lorsque le train est rentré et d'une disposition optimale vis-à-vis de la structure, la structure du train permettant en outre une variation précise, fiable et sans séquence, de sa géométrie lors du relevage.

L'invention n'est pas limitée au mode de réalisation qui vient d'être décrit, mais englobe au contraire une variante reprenant, avec des moyens équivalents, les caractéristiques essentielles énoncées plus haut.

## Revendications

1. Train d'atterrissage d'aéronef, du type à relevage latéral, comportant une jambe articulée sur une structure d'aéronef et équipée inférieurement d'un train de roues, ainsi qu'un vérin de manoeuvre assurant le pivotement de cette jambe autour de son axe, caractérisé en ce que :
- la jambe (50) est formée d'un caisson (10) en V dont les deux branches (11, 12) sont articulées entre elles, avec une première branche formant poutre (11) qui est articulée sur la structure d'aéronef, et une seconde branche (12) en extrémité de laquelle est articulé un balancier (14) porteur de roues en pouvant tourner autour d'un axe central, (15) qui, en position train bas, est sensiblement perpendiculaire au plan longitudinal médian de l'aéronef ;
- un amortisseur (17) relie les deux branches (11, 12) du caisson articulé (10) de façon à former un triangle qui est fixe lors du relevage ou de la descente du train ;
- le balancier (14) s'étend de part et d'autre de son axe central (15), et sa partie avant (14.1) est reliée, par l'intermédiaire d'un élément positionneur (27), à une bielle (25) articulée sur la première branche (11) du caisson (10), ladite bielle étant en outre reliée à cette première branche par un embiellage (30) lui-même relié à la structure d'aéronef par une bielle directrice (35), cet agencement étant tel qu'en position train bas l'embiellage (30) constitue un alignement et la partie avant du balancier (14) porteur de roues est relevée, et que le balancier (14) est sensiblement parallèle à la première branche (11) du caisson lorsque le train est relevé.

2. Train d'atterrissage selon la revendication 1, caractérisé en ce que l'amortisseur (17) est accroché sur un appendice d'extrémité (18) de la seconde branche (12) du caisson articulé (10), et sur un appendice frontal (49) de la première branche (11) dudit caisson, et le balancier (14) porteur de roues est disposé, en position train bas, en-dessous dudit appendice d'extrémité.

3. Train d'atterrissage selon la revendication 1 ou la revendication 2, caractérisé en ce que la bielle (25) associée à l'élément positionneur (27) est montée pour tourner autour d'un axe qui coïncide avec l'axe d'articulation (13) des deux branches (11, 12) du caisson.

4. Train d'atterrissage selon la revendication 3, caractérisé en ce que la bielle (25) est montée sur une excroissance frontale (24) de cet axe d'articulation (13).

5. Train d'atterrissage selon l'une des revendications 1 à 4, caractérisé en ce que l'embiellage (30) associé à l'élément positionneur (27) est constitué par une bielle (31) et un levier (32), ladite bielle étant articulée en extrémité de la bielle (25) qui est associée à l'élément positionneur et ledit levier étant articulé sur la première branche (11) du caisson en étant couplé avec un levier complémentaire (36) sur lequel s'accroche une extrémité de la bielle directrice (35).

6. Train d'atterrissage selon la revendication 5, caractérisé en ce que le levier (32) de l'embiellage (30) est monté pour tourner sur un axe (33) qui présente un prolongement s'étendant de l'autre côté de la première branche (11) du caisson articulé, la bielle directrice (35) coopérant avec ce prolongement d'axe par l'intermédiaire du levier complémentaire (36).

7. Train d'atterrissage selon l'une des revendications 1 à 6, caractérisé en ce que l'élément positionneur (27) est une bielle télescopique formant barre directrice en étant verrouillée hydrauliquement lors du relevage ou de la descente du train, et amortisseur de tangage lors du roulage.

8. Train d'atterrissage selon l'une des revendications 1 à 7, dans lequel des moyens de contreventement sont associés à la jambe de train, caractérisé en ce qu'il comporte une contre-fiche articulée (40) dont le bras supérieur (41) est articulé, par une première chape tourillonnante (44), à la structure d'aéronef, et dont le bras inférieur (42) est articulé, par une seconde chape tourillonnante (47), à la seconde branche (12) du caisson, ce bras inférieur (42) pouvant en outre tourner autour de son axe (42.1) par rapport à cette seconde chape tourillonnante (47) grâce à une chape tournante d'extrémité (46) associée audit bras.

9. Train d'atterrissage selon la revendication 8, caractérisé en ce que la première chape (44) tourillonne autour d'un axe (48) qui coïncide avec l'axe d'articulation (13) des deux branches (11, 12) du caisson.
